# EUROPEAN PATENT APPLICATION

(11) **EP 4 528 126 A1**
(43) Date of publication of application: **26.03.2025**
(21) Application number: 24197871.7
(22) Date of filing: 02.09.2024
(51) Int. Cl.: F16H 1/32

(54) **POWER TRANSMISSION DEVICE, SPEED REDUCER, INDUSTRIAL MACHINE, AND METHOD OF DISASSEMBLING INDUSTRIAL MACHINE FOR MAINTENANCE**

(30) Priority: 20.09.2023 JP 2023151884
(71) Applicant: Nabtesco Corporation, Tokyo 102-0093 (JP)
(72) Inventor: Kihira, Masato, Tokyo, 102-0093 (JP); Matsubayashi, Masahiro, Tokyo, 102-0093 (JP); Furukawa, Keita, Tokyo, 102-0093 (JP); Hirosato, Koki, Tokyo, 102-0093 (JP)
(74) Representative: Grünecker Patent- und Rechtsanwälte PartG mbB

(57) **Abstract**

The present invention relates to a power transmission device, a speed reducer (12), and a method of disassembling an industrial machine for maintenance. The power transmission device includes a casing (13), output rotating body (14A, 14B), input shaft (30), power transmission mechanism (15, 16A, 16B, 26), shaft seal portion (70), casing seal portion (44), and end cover (34). The casing (13) is fixed to the base member (2). The output rotating body (14A, 14B) is rotatably housed inside the casing (13). The output rotating body (14A, 14B) has a first connecting portion (14N) that is to be connected to a connected member (3). The input shaft (30) is connected to a rotating shaft (11a) of a motor (11). The power transmission mechanism (15, 16A, 16B, 26) is disposed in the casing while surrounded by the output rotating body (14A, 14B) and transmits rotation of the input shaft (30) to the output rotating body (14A, 14B). The shaft seal portion (70) seals a space between a through hole of the output rotating body (14A, 14B) and the input shaft (30). The casing seal portion (44) seals a space between the casing (13) and the outer peripheral surface of the output rotating body (14A, 14B). The end cover (34) is attached to the first connecting portion (14N) of the output rotating body (14A, 14B).

## Description

### TECHNICAL FIELD

The present invention relates to a power transmission device, a speed reducer, an industrial machine, and a method of disassembling an industrial machine for maintenance.

### BACKGROUND

Industrial machinery such as welding robots have a drive unit including a motor, a speed reducer, and a base member. In this drive unit, the speed reducer reduces the rotation of the motor. The motor and reducer are fixedly installed on the base member (see, for example, Patent Literature 1).

In the drive unit described in Patent Literature 1, the speed reducer includes a casing having a substantially cylindrical shape. The casing is fixedly provided on the base member. The motor is disposed at the back of the speed reducer. The motor is fixed to the base member via an adapter, as is the speed reducer. The speed reducer includes the casing, a carrier, a crankshaft, and an oscillating gear. The casing has an inner peripheral surface and internal teeth provided on the inner peripheral surface. The carrier is rotatably housed inside the casing. The crankshaft is rotatably supported by the carrier. The crankshaft has an eccentric region. The eccentric region is pivoted by the rotation of the motor. The oscillating gear has external teeth fewer than the internal teeth of the casing. While the external teeth mesh with the internal teeth of the casing, the oscillating gear oscillatorily rotates by receiving a rotational force from the eccentric region of the crankshaft. Once the oscillating gear oscillatorily rotates by receiving a rotational force from the eccentric region of the crankshaft, the rotational component of the oscillating gear is outputted to the carrier via the crankshaft. As a result, the rotation of the motor is decelerated and outputted to the carrier.

The carrier of the speed reducer is fixed to a driven member such as a rotating arm of a robot, by bolting at one end surface of the carrier in the axial direction (end surface facing away from the motor). A portion of the speed reducer between the casing and the carrier is sealed by a casing sealing member in an end region situated on the same side as the driven member. A center hole and crank hole in the end surface of the carrier on the same side are sealed by sealing members. The interior of the speed reducer and the area surrounded by the adapter and motor and facing the end surface of the reducer are filled with lubricant. The lubricating fluid lubricates the mechanical parts disposed inside or outside the speed reducer.

### RELEVANT REFERENCES

### LIST OF RELEVANT PATENT LITERATURE

Patent Literature 1: Japanese Patent Application Publication No. 2021-38809

### SUMMARY

The speed reducer described in Patent Literature 1 can be separated from the driven member for maintenance or the like while the speed reducer can be still connected to the motor. At this time, the lubricant filled inside the speed reducer and adapter does not need to be drained to the outside. This makes maintenance work relatively easy. However, in the speed reducer of Patent Literature 1, the adapter for fixing the motor to the base member also serves as the lubricant-filled space at the end of the speed reducer. As a result, the overall length of the machine with the motor connected to the reducer is increased. For power transmission devices with such a speed reducer, it is desired to have a shorter overall length of the machine with the motor connected to it, while adopting a structure that does not require draining the lubricating liquid for maintenance.

The present invention provides a power transmission device, a speed reducer, an industrial machine, and a method of disassembling the industrial machine for maintenance, which has good maintainability and can reduce the overall length of the device with a motor connected thereto.

A power transmission device according to one aspect of the invention includes: a casing fixed to a base member; an output rotating body having a through hole and an axial end in an axial direction, the through hole penetrating in the axial direction, the output rotating body being rotatably housed in the casing and having a first connecting portion that is disposed at the axial end and to be connected to a connected member; an input shaft inserted in the through hole and connected to a rotating shaft of a motor; a power transmission mechanism transmitting rotation of the input shaft to the output rotating body, the power transmission mechanism being disposed in the casing while surrounded by the output rotating body; a shaft seal portion sealing a space between the through hole and the input shaft; a casing seal portion sealing a space between the casing and an outer peripheral surface of the output rotating body; and an end cover attached to the first connecting portion of the output rotating body.

With the above configuration, the interior of the power transmission device is sealed by the shaft seal portion, casing seal portion, and end cover. This prevents leakage of the lubricating liquid filled inside the power transmission device. Since the interior of the power transmission device is sealed by itself, the motor can be connected to the power transmission device without the use of an adapter. Therefore, when such a power transmission device is used, the overall length of the power transmission device with the motor connected can be further reduced.

A speed reducer according to another aspect of the invention includes: a casing fixed to a base member and having internal tooth on its inner peripheral surface; a carrier having a through hole and an axial end in an axial direction, the through hole penetrating the carrier in the axial direction, an end in the axial direction, and a first and second outer peripheral surfaces that are spaced apart from each other in the axial direction, the carrier being rotatably housed in the casing and having a first connecting portion that is disposed at the axial end and to be connected to a connected member; an input shaft rotatably inserted in the through hole and connected to a rotating shaft of a motor; a crankshaft rotatably supported inside the carrier and having an eccentric region, the eccentric region spinning and rotating in conjunction with the rotation of the input shaft; an oscillating gear disposed between the first outer peripheral surface and the second outer peripheral surface, the oscillating gear oscillatorily rotates with the eccentric region of the crankshaft and outputting a reduced rotation to the carrier while meshing with the internal teeth; a shaft seal portion sealing a space between the through hole and the input shaft; a casing seal portion sealing a space between the casing and the first outer peripheral surface and a space between the casing and the second outer peripheral surface; and an end cover attached to the first connecting portion of the carrier.

With the above configuration, the interior of the speed reducer is sealed by the shaft seal portion, casing seal portion, and end cover. This prevents leakage of the lubricating liquid filled inside the speed reducer. Since the interior of the speed reducer is sealed by itself, the motor can be connected to the speed reducer without the use of an adapter. Therefore, when such a speed reducer is used, the overall length of the device with the motor connected can be further reduced.

In the above speed reducer, the first connecting portion of the carrier may have an outer peripheral edge portion situated at the axial end of the carrier. A recess may be formed in the outer peripheral edge portion on its inner side. A transmission rotating body that transmits rotation of the input shaft to the crankshaft may be disposed in the recess. The end cover may be attached to the outer peripheral edge portion so that it covers the recess.

In this case, it is possible to seal one end of the carrier in the axial direction by attaching the end cover to the outer peripheral edge portion to cover the recess where the transmission rotating body is disposed. When this configuration is adopted, the end cover, which has a simple shape that does not occupy much space in the axial direction, can seal the one end of the carrier in the axial direction. Consequently, it is possible to reduce the shaft length of the speed reducer and facilitate a fabrication process.

The above speed reducer may further include a motor fixing portion disposed at an end of the carrier opposite to the first connecting portion in the axial direction. The motor may be fixed to the motor fixing portion.

When the motor is fixed to the motor fixing portion of the carrier and the motor is driven in this state, the motor rotates integrally with the carrier while the decelerated rotation is transmitted from the carrier to the connected member. In this configuration, the motor is directly fixed to the axial end (motor fixing portion) of the carrier. Therefore, compared to the case where the motor is fixed to the base member via an adapter, the shaft length of the entire device with the motor connected to the reducer can be shortened.

In the above speed reducer, the input shaft may have a second connecting portion protruding from the motor fixing portion. The second connecting portion is connected to the rotating shaft in a relatively non-rotatable manner inside the motor.

In this case, the input shaft is connected to the motor's rotating shaft inside the motor. The shaft seal member that seals the portion between the shaft hole and the input shaft can be disposed closer to the motor. This makes it possible to reduce the shaft length of the carrier.

In the speed reducer according to the aspect of the present invention, the second connecting portion and the rotating shaft may be connected by spline fitting.

In this case, when fixing the motor to the motor fixing portion, the end of the input shaft can be easily connected to the rotating shaft of the motor by inserting the end of the input shaft into the motor. In this way, attachment of the motor to the speed reducer becomes easy with this configuration.

In the speed reducer according to the aspect, the carrier includes: a first carrier block having a base plate portion and a plurality of column portions, the base plate portion having an annular plate shape with an end surface in the axial direction, the plurality of column portions extend substantially along the axial direction from the end surface of the base plate portion; and a second carrier block having a first end surface against which the plurality of column portions are butted in the axial direction and a second end surface opposite to the first end surface in the axial direction, the second carrier block having an annular plate shape; and a fastening member securing the second carrier block to a corresponding one of the column portions from the second end surface of the second carrier block. The motor fixing portion may be disposed on an end of the base plate portion opposite to the plurality of column portions in the axial direction.

In this case, the motor is fixed to the base plate portion of the first carrier block where the fastening members for connecting the second carrier block to the column portions of the first carrier block are not disposed. Thus, the fixing member for fixing the motor to the carrier will not interfere with the fastening members for connecting the pillar portion of the first carrier block and the second carrier block. Therefore, when this configuration is adopted, it is no longer necessary to extend the shaft length of the carrier to avoid the interference, and the shaft length of the reduction gear can be further shortened by that amount.

An industrial machine of yet another aspect of the present invention includes: a motor; a speed reducer for decelerating rotation of the motor; a base member to which the speed reducer is fixed; and a driven member being rotated by output of the speed reducer. The speed reducer includes: a casing fixed to a base member and having internal tooth on its inner peripheral surface; a carrier having a through hole and an axial end in an axial direction, the through hole penetrating the carrier in the axial direction, the carrier further having first and second outer peripheral surfaces that are spaced apart from each other in the axial direction, the carrier being rotatably housed in the casing and having a first connecting portion that is disposed at the axial end and to be connected to the driven member; an input shaft rotatably inserted in the through hole and connected to a rotating shaft of a motor; a crankshaft rotatably supported inside the carrier and having an eccentric region, the eccentric region spinning and rotating in conjunction with the rotation of the input shaft; an oscillating gear disposed between the first outer peripheral surface and the second outer peripheral surface, the oscillating gear oscillatorily rotates with the eccentric region of the crankshaft and outputting a reduced rotation to the carrier while meshing with the internal teeth; a shaft seal portion sealing a space between the through hole and the input shaft; a casing seal portion sealing a space between the casing and the first outer peripheral surface and a space between the casing and the second outer peripheral surface; and an end cover attached to the first connecting portion of the carrier; and a motor fixing portion disposed at an end of the carrier opposite to the first connecting portion in the axial direction. The motor is fixed to the motor fixing portion. The input shaft has a second connecting portion protruding from the motor fixing portion, the second connecting portion being connected to the rotating shaft in a relatively non-rotatable manner inside the motor.

With the above configuration, the interior of the speed reducer is sealed by the shaft seal portion, casing seal portion, and end cover. This prevents leakage of the lubricating liquid filled inside the speed reducer. Since the interior of the speed reducer is sealed by itself, the motor can be connected to the speed reducer without the use of an adapter. Therefore, when such an industrial machine is used, the overall length of the device with the motor connected can be further reduced.

Another aspect of the invention provides a method of disassembling an industrial machine for maintenance. The industrial machine includes: a motor; a speed reducer for decelerating rotation of the motor; a base member to which the speed reducer is fixed; and a driven member being rotated by output of the speed reducer. The speed reducer includes: a casing fixed to a base member and having internal tooth on its inner peripheral surface; a carrier having a through hole and an axial end in an axial direction, the through hole penetrating the carrier in the axial direction, the carrier further having first and second outer peripheral surfaces that are spaced apart from each other in the axial direction, the carrier being rotatably housed in the casing and having a first connecting portion that is disposed at the axial end and to be connected to the driven member; an input shaft rotatably inserted in the through hole and connected to a rotating shaft of a motor; a crankshaft rotatably supported inside the carrier and having an eccentric region, the eccentric region spinning and rotating in conjunction with the rotation of the input shaft; an oscillating gear disposed between the first outer peripheral surface and the second outer peripheral surface, the oscillating gear oscillatorily rotates with the eccentric region of the crankshaft and outputting a reduced rotation to the carrier while meshing with the internal teeth; a shaft seal portion sealing a space between the through hole and the input shaft; a casing seal portion sealing a space between the casing and the first outer peripheral surface and a space between the casing and the second outer peripheral surface; and an end cover attached to the first connecting portion of the carrier; and a motor fixing portion disposed at an end of the carrier opposite to the first connecting portion in the axial direction. The motor is fixed to the motor fixing portion. The input shaft has a second connecting portion protruding from the motor fixing portion, the second connecting portion being connected to the rotating shaft in a relatively non-rotatable manner inside the motor. The method includes: temporary securing the driven member to the base member by attaching a fixing jig to the base member and the driven member; a first unfastening step for separating the driven member from the carrier after the temporary securing; a second unfastening step for separating the casing from the base member after the temporary securing; and separating the speed reducer together with the motor from the base member after the first and second unfastening steps.

When disassembling an industrial machine by the method described above, the speed reducer can be removed from the base member together with the motor while the driven member remains fixed to the base member by the fixing jig. At this time, the driven member does not need to be separated from the base member. Therefore, even when the driven member is a long and heavy, the speed reducer can be easily separated for maintenance work. Therefore, when separating the speed reducer from the base member, there is no need to drain from the speed reducer the lubricating liquid that lubricating the mechanical parts. This also contributes greatly to facilitating the disassembly work for maintenance.

### ADVANTAGEOUS EFFECTS

In the power transmission device, speed reducer, and industrial machine described above, the inside of the power transmission device (reducer) can be sealed itself by the shaft seal portion, casing seal portion, and end cover. Thus, the motor can be connected to the power transmission device (speed reducer) without the use of an adapter that also serves as a lubricant filled portion. Therefore, the overall length of the drive unit with the motor connected can be further reduced while maintaining easiness of maintenance work.

The above-mentioned method of disassembling an industrial machine for maintenance allows the reducer to be removed from the base member together with the motor without removing the driven member from the base member, thereby facilitating disassembly work for maintenance of the industrial machine.

### BRIEF DESCRIPTION OF THE DRAWINGS

Fig. 1 is a longitudinal sectional view of an industrial robot relating to an embodiment.
Fig. 2 is an enlarged longitudinal sectional view of a speed reducer used in the industrial robot relating to the embodiment.
Fig. 3 is a longitudinal sectional view for illustrating a step of a method of disassembling the industrial robot relating to the embodiment for maintenance.
Fig. 4 is a longitudinal sectional view for illustrating another step of the method of disassembling the industrial robot relating to the embodiment for maintenance.
Fig. 5 is a longitudinal sectional view for illustrating yet another step of the method of disassembling the industrial robot relating to the embodiment for maintenance.

### DESCRIPTION OF THE EMBODIMENTS

The embodiments of the present invention will be hereinafter described with reference to the drawings.

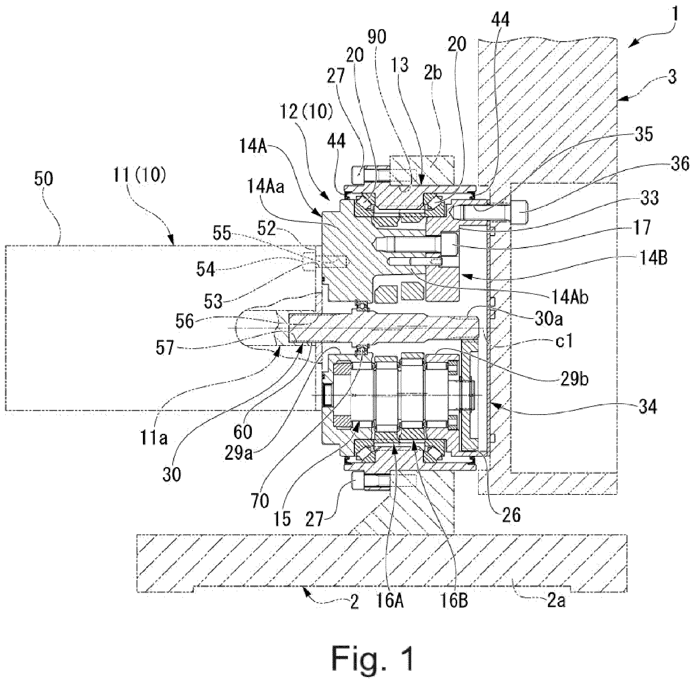

Fig. 1 is a longitudinal sectional view of an industrial robot 1, which is one example of an industrial machine. The industrial robot 1 according to the embodiment is an articulated robot with rotatable multiple joints. The industrial robot 1 includes a base body, a base member 2, and a pivoting arm 3. The base member is disposed at the lower end of the industrial robot 1. The base member 2 is fixedly installed on a floor or other installation surface. The rotating arm 3 is situated near the base body and is connected to the base body in a rotatable manner. A drive unit 10 is provided at the portion where the base member 2 and the rotating arm 3 are connected. The drive unit 10 operates the pivoting arm 3 through control by a controller not shown in the figures. The drive unit 10 includes a motor 11 for driving and a speed reducer 12 that reduces the rotation speed of the motor 11. A proximal end of the rotating arm 3 is connected to the output side of the speed reducer 12. The rotating arm 3 is an example of a connected member.

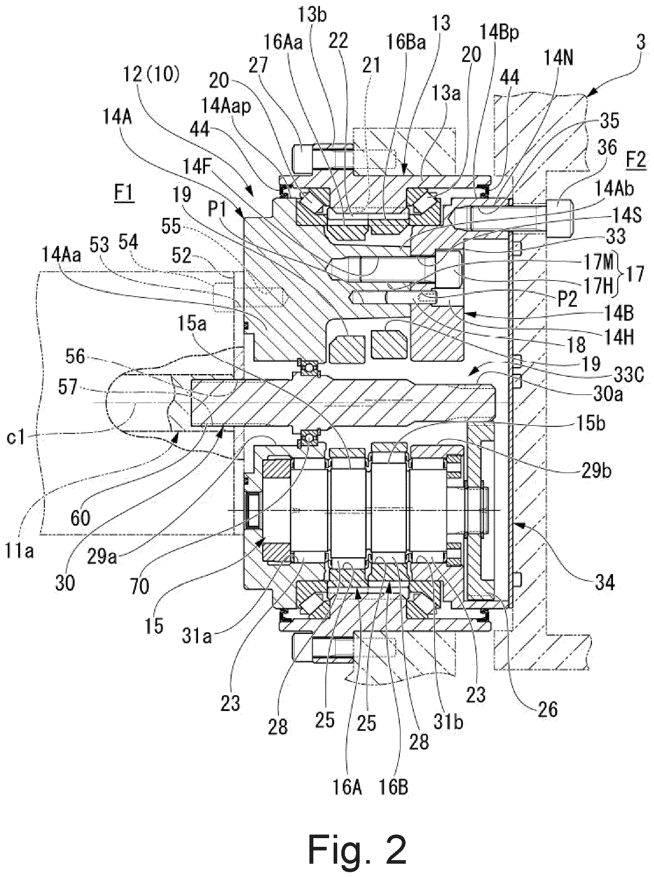

Fig. 2 is an enlarged sectional view of the speed reducer 12 shown in Fig. 1. As shown in Fig. 2, the speed reducer 12 includes a casing 13, a first carrier block 14A, a second carrier block 14B, an input shaft 30, multiple (e.g., three) crankshafts 15, a first oscillating gear 16A, and a second oscillating gear 16B. The casing 13 is roughly cylindrical in shape. The first carrier block 14A and the second carrier block 14B are rotatably held inside the casing 13, i.e., on the inner peripheral surface of the casing 13. The input shaft 30 passes through the centers of the first carrier block 14A and the second carrier block 14B in the axial direction. One end of the input shaft 30 in the axial direction (the first end side, which will be later described) is connected to a rotating shaft 11a of the motor 11. Two or more crankshafts 15 are rotatably supported by the first carrier block 14A and the second carrier block 14B. Each of the crankshafts 15 has two eccentric regions 15a and 15b. The first and second oscillating gears 16A and 16B rotate with the eccentric regions 15a and 15b, respectively. In the embodiment, the first carrier block 14A and the second carrier block 14B form a carrier, which is an output rotating body. In the embodiment, the first and second oscillating gears 16A and 16B are the oscillating gears. In the present invention, the number of oscillating gears is not limited to two. Alternatively, a single or three or more oscillating gears may be provided.

For ease of illustration, one side of the input shaft 30 in the axial direction that is connected to the motor 11 is referred to as the "first end side" and the opposite side is referred to as the "second end side". For example, in Fig. 2, the first end side is indicated with the reference number F1 and the second end side is indicated with the reference number F2. The first carrier block 14A includes a base plate portion 14Aa and a plurality of column portions 14Ab. The base plate portion 14Aa has a disc shape with an opening. The base plate portion 14Aa has a first end surface facing the first end and a second end surface facing the second end. The plurality of column portions 14Ab extend axially from the end surface (second end surface) of the base plate portion 14Aa toward the second carrier block 14B. Each of the column portions 14Ab has a tip end facing toward the second end surface. The second carrier block 14B has an annular plate shape. The second carrier block 14B has a first end surface facing the first end and a second end surface facing the second end. The tip end of each of the plurality of column portions 14Ab of the first carrier block 14A is butted against the first end surface of the second carrier block 14B. The second carrier block 14B has an insertion hole 14S through which a male threaded portion 17M of a bolt 17 is inserted and a block hole 14H. The inner peripheral surface of the block hole 14H has a seating surface that contacts a head 17H of the bolt 17. The bolt 17 is a fastening member that fastens the first carrier block 14Ato the second carrier block 14B. The male threaded portion 17M of the bolt 17 engages with a female threaded portion 14F provided in each of the plurality of column portions 14Ab, thereby securing the plurality of column portions 14Ab and the second carrier block 14B. The bolts 17 extend from the second end side of the second carrier block 14B through the insertion holes 14S in the second carrier block 14B and reach to the corresponding column portions 14Ab. The first carrier block 14A is disposed on the first end side in the casing 13. The second carrier block 14B is disposed on the second end side in the casing 13. The element in Fig. 2 indicated with reference number 18 is a positioning pin. The positioning pin 18 is a member for positioning the second carrier block 14B on the plurality of column portions 14Ab before fastening with the bolts 17. The positioning pin 18 is inserted into a pin hole P1 (first pin hole) in the column 14Ab of the first carrier block 14A through a pin hole P2 (second pin hole) that communicates with the block hole 14H of the second carrier block 14B.

A through hole 29a (first through hole) is formed in the base plate portion 14Aa of the first carrier block 14A at the center of the plate. A through hole 29b (second through hole) is formed in the second carrier block 14B at the center of the block. The through holes 29a and 29b are shaft holes into which the input shaft 30 is inserted. The through holes 29a and 29b penetrates the carrier, which is the output rotating body, in the axial direction. Hereafter, these through holes 29a and 29b are referred to as "shaft holes 29a and 29b". The input shaft 30 is rotatably supported in the shaft hole 29a on the first carrier block 14A side via a bearing 70 that has a sealing function. The input shaft 30 is disposed so that it is concentric with a rotation center axis c1 of the first carrier block 14A and the second carrier block 14B. The bearing 70 with the sealing function seals the space between the inner surface of the shaft hole 29a and the input shaft 30 in a liquid-tight manner. The bearing 70 with the sealing function has a shaft seal portion. Although the bearing 70 with the sealing function is used in this embodiment, the bearing that rotatably supports the input shaft 30 and the shaft seal portion may be provided separately. In the embodiment, the shaft seal portion in the bearing 70 with seal function seals the space between an area of the shaft holes 29a, 29b (shaft hole 29a) on the motor 11 side and the input shaft 30.

A gap is left between the base plate portion 14Aa of the first carrier block 14A and the second carrier block 14B in the axial direction. In this gap, the first and second oscillating gears 16A and 16B are arranged. The first and second oscillating gears 16A and 16B have relief holes 19. The column portions14Ab of the first carrier block 14A pass through the relief holes 19. The relief holes 19 have sufficiently larger sizes than the outer size of the column portions 14Ab, so that the column portions 14Ab do not prevent the oscillatory rotation of the first and second oscillating gears 16A and 16B.

The casing 13 includes a casing body 13a and a flange portion 13b. The casing body 13a has a cylindrical shape. The flange portion 13b protrudes radially outward from an outer peripheral surface of the casing body 13a near the first end. The casing body 13a extends over the outer peripheral surface of the base plate portion 14Aa of the first carrier block 14A and the outer peripheral surface of the second carrier block 14B. The base plate portion 14Aa of the first carrier block 14A and the second carrier block 14B are respectively rotatably supported via bearings 20 on the both edges of the casing body 13a facing in the axial direction. The middle region of the casing body 13a in the axial direction (region facing the outer peripheral surfaces of the first and second oscillating gears 16A and 16B) has a plurality of pin grooves 21 in the inner peripheral surface of the casing body. The plurality of pin grooves 21 extend parallel to the rotation center axis c1 of the first and second carrier blocks 14A and 14B. Each of the pin grooves 21 receives an internal tooth pin 22 therein. The internal tooth pins 22 have a substantially cylindrical shape and are received in a rotatable manner. The internal tooth pins 22 attached to the inner peripheral surface of the casing body 13a face the outer peripheral surfaces of the first and second oscillating gears 15A and 15B. In this embodiment, the internal tooth pins 22 serve as internal teeth on the inner peripheral surface of the casing 13.

The base member 2 has a base body 2a and a retaining wall 2b, as shown in Fig. 1. The base body 2a is fixedly installed on the installation surface. The retaining wall 2b extends upward from the base body 2a. The retaining wall 2b has a circular-shaped support hole 90. The outer peripheral surface of the casing body 13a on the speed reducer 12 side is fitted into the support hole 90. The flange portion 13b of the casing 13 is butted against an end surface of the retaining wall 2b in the axial direction when the casing body 13a is fitted into the support hole 90. The flange portion 13b is fastened and fixed to the retaining wall 2b by a bolt 27, which is a fastening member.

The first and second oscillating gears 16A and 16B have an outer diameter slightly smaller than the inner diameter of the casing 13a. On the outer peripheral surfaces of the first and second oscillating gears 16A and 16B, external teeth 16Aa and 16Ba are formed such that the external teeth 16Aa and 16Ba contact and mesh with the internal tooth pins 22 on the inner peripheral surface of the casing body 13a. The number of external teeth 16Aa and 16Ba formed on the outer peripheral surfaces of the first and second oscillating gears 16A and 16B is slightly less than (for example, by one) the number of the internal tooth pins 22 (pin grooves 21).

The crankshafts 15 are arranged on a circle centered at the rotation center axis c1 of the first and second carrier blocks 14A and 14B. Each of the crankshafts 15 is rotatably supported by the first carrier block 14A and the second carrier block 14B via the bearing 23. Each of the crankshafts 15 has a pair of shaft support regions axially separated from each other. Two eccentric regions 15a and 15b are provided between the two shaft support regions. The first carrier block 14A has a shaft support hole 31a into which one of the two shaft support regions of each crankshaft 15 is inserted. The second carrier block 14B has a shaft support hole 31b into which the other of the two shaft support regions of each crankshaft 15 is inserted. A spur gear 26 is attached to the end of the crankshaft 15 protruding from the shaft support hole 31b of the second carrier block 14B toward the second end side. In other words, the two or more spur gears 26 are attached to the ends of the two or more crankshafts 15 in a one-to-one correspondence. The spur gears 26 transmit the rotation of the input shaft 30 to the crankshafts 15. The spur gears 26 engage with external teeth 30a formed on the outer circumference of the input shaft 30 on the second end side. In the embodiment, the spur gears 26 serve as the transmission rotating bodies for transmitting the rotation of the input shaft 30 to the crankshafts 15. The transmission rotating body is not limited to the spur gear 26. The transmission rotating body can be any rotating body that can transmit the rotation of the input shaft 30 to the crankshaft 15. The transmission rotating body may be, for example, a rotating body that is in frictional contact with the outer circumference of the input shaft 30.

As for the two eccentric regions 15a and 15b of the crankshaft 15, the respective center axes of the eccentric regions 15a and 15b are eccentric with respect to the center axis of the shaft support region. The two eccentric regions 15a and 15b are eccentric so that the phases of the two eccentric regions 15a and 15b are 180° out of phase with each other about the center axis of the shaft support region (center axis of the crankshaft 15). The eccentric regions 15a and 15b of the crankshaft 15 pass through the first oscillating gear 16A and the second oscillating gear 16B, respectively. Each of the first and second oscillating gears 16A and 16B has a support hole 25. The eccentric regions 15a and 15b are rotatably received in the support holes 25 via eccentric bearings 28 (cylindrical roller bearings).

In the speed reducer 12 relating to this embodiment, as the crankshafts 15 rotate in one direction when acted upon by the rotation of the input shaft 30, the eccentric regions 15a and 15b of the crankshafts 15 oscillatorily rotate in the same direction with a predetermined radius. With the rotation, the first and second oscillating gears 16A and 16B rotate (oscillatory rotate) in the same direction with the same radius. Simultaneously, the external teeth 16Aa and 16Ba of the first and second oscillating gears 16A and 16B touch and mesh with the internal tooth pins 22 provided on the inner peripheral surface of the casing body 13a.

In the speed reducer 12 of the embodiment, the respective numbers of the external teeth 16Aa and 16Ba of the first and second oscillating gears 16A and 16B are slightly smaller than the number of internal tooth pins 22 on the casing body 13a side. Thus, while the first and second oscillating gears 15A and 15B oscillatorily rotate once, the first and second oscillating gears 16A and 16B receive a reaction force in the rotational direction from the internal tooth pins 22 on the casing body 13a and, so that the first and second oscillating gears 16A and 16B autorotate by a predetermined pitch in the opposite direction to the oscillatory rotating direction. As a result, the first and second carrier blocks 14A and 14B, which are engaged with the first and second oscillating gears 16A and 16B via the crankshaft 15, rotate in the same direction and at the same pitch as the first oscillating gear 16A and the second oscillating gear 16B. In this way, the rotation of the input shaft 30 is reduced at a predetermined reduction ratio and outputted as the rotation of the first carrier block 14A and second carrier block 14B. In the embodiment, the two eccentric regions 15a and 15b of the crankshaft 15 are shifted 180 degrees from each other around the axis. Thus, the first and second oscillating gears 16A and 16B rotate 180 degrees out of phase from each other. In the embodiment, the spur gear 26, crankshaft 15, first oscillating gear 16A and second oscillating gear 16B, and the like form a power transmission mechanism. The power transmission mechanism is surrounded by the first carrier block 14A and the second carrier block 14B, which are the output rotating bodies. The power transmission mechanism is disposed inside the casing 13. The power transmission mechanism transmits the rotation of the input shaft 30 to the output rotating bodies, the first carrier block 14A and the second carrier block 14B.

The end surface of the second carrier block 14B facing the second end has an outer peripheral edge portion 14N. Viewed in the axial direction, the outer peripheral edge portion 14N has a circular shape. A recess 33 is formed in the outer peripheral edge portion 14N on the inner side. In other words, the shape of the recess 33 is circular. The spur gears 26 provided in one-to-one correspondence with the ends of the crankshafts 15 are received in the recess 33. In other words, the outer peripheral edge portion 14N protrudes from a bottom surface of the recess 33 toward the second end. A central region 33C of the bottom surface of the recess 33 communicates with the shaft hole 29b of the second carrier block 14B. A flat end cover 34 is attached to the outer peripheral edge portion 14N. The end cover 34 covers the recess 33 and the shaft hole 29b from the second end side. The end cover 34 covers the power transmission mechanism disposed between the input shaft 30 and the spur gear 26 and the end of the shaft hole 29b from the second end side. In other words, the end cover 34 shields the space where the power transmission mechanism is located from the outside. Here, the outside refers to parts or space located on the second end side from the end cover 34. The end cover 34 protects the power transmission mechanism. The end cover 34 is formed of, for example, a flat metal plate. The space between the end cover 34 and the end surface of the outer peripheral edge portion 14N is sealed by an annular sealing member not shown.

The outer peripheral edge portion 14N of the second carrier block 14B has a plurality of screw holes 35. On the second end side, the flat end cover 34 attached to the end surface of the second carrier block 14B (end surface of the outer peripheral edge portion 14N) overlaps with the end surface of the rotating arm 3 on its proximal side shown in Fig. 1. Here, the end surface of the second carrier block 14B on the second end side (end surface of the outer peripheral edge portion 14N) corresponds to the end of the second carrier block 14B in the axial direction. A plurality of bolts 36, which are fastening members, secure the rotating arm 3 to the end surface of the second carrier block 14B. The plurality of bolts 36 are tightened into the corresponding screw holes 35 formed in the outer peripheral edge portion 14N of the second carrier block 14B in one-to-one correspondence. The plurality of bolts 36 secure the rotating arm 3 to the second carrier block 14B. Here, the outer peripheral edge portion 14N of the second carrier block 14B is a first connecting portion that is to be connected to the rotating arm 3, which is the connected member. The portion of the end cover 34 that is partially sandwiched between the rotating arm 3 and the outer peripheral edge portion 14N is a part of the first connecting portion.

A casing seal member 44 (casing seal portion) is provided between the end region of the casing body 13a on the first end side and an outer peripheral surface 14Aap (first outer peripheral surface) of the base plate portion 14Aa of the first carrier block 14A. The casing seal member 44 liquid-tightly seals a space between the end region of the casing body 13a on the first end side and the outer peripheral surface 14Aap (first outer peripheral surface) of the base plate portion 14Aa of the first carrier block 14A. In the embodiment, the casing seal member 44 may have, for example, a structure in which the casing seal member 44 is fixed to either one of the casing body 13a or the base plate portion 14Aa, and the seal portion contacts slidably with to the other of the casing body 13a or the base plate portion 14Aa. The casing seal member 44 (casing seal portion) is provided between the end region of the casing body 13a on the second end side and an outer peripheral surface 14Bp (second outer peripheral surface) of the second carrier block 14B. Similar to the above, the casing seal member 44 liquid-tightly seals a space between the end region of the casing body 13a on the second end side and the outer peripheral surface 14Bp (second outer peripheral surface) of the second carrier block 14B. The outer peripheral surface 14Aap of the base plate portion 14Aa, where one of the casing seal member 44 is disposed, and the outer peripheral surface 14Bp of the second carrier block 14B, where the other of the casing seal member 44 is disposed, are separated from each other in the axial direction of the carrier.

The internal space of the speed reducer 12 is sealed by the bearing 70 with the sealing function (shaft sealing member), end cover 34, and casing seal member 44 as described above. The internal space of the speed reducer 12 is filled with lubricating fluid to lubricate the mechanical parts of the speed reducer 12.

The motor 11 has a motor case 50 and a rotating shaft 11a. The motor case 50 houses the rotary driving unit of the motor. The rotating shaft 11a is connected to the driving unit of the motor. An attachment flange 52 is provided at an end of the motor case 50 on the output side. The attachment flange 52 has a plurality of insertion holes 53. An end surface of the motor case 50 on the output side is butted against the end surface of the first carrier block 14A (base plate portion 14Aa) of the speed reducer 12 on the first end side. The shaft portion is fastened and fixed to the first carrier block 14A by bolts 54 inserted in the insertion holes 53. The end surface of the first carrier block 14A on the first end side has threaded holes 55 for fastening the bolts 54. In the embodiment, the end of the base plate portion 14Aa of the first carrier block 14A (the end on the first end side) is a motor fixing portion.

The rotating shaft 11a is disposed on the inner side of the motor case 50 than the end surface of the motor case 50 on the output side. In other words, the rotating shaft 11a is disposed inside the motor case 50. A shaft insertion hole 56 is formed in the motor case 50 at the end surface on the output side. The second connecting portion 60 of the input shaft 30 described below is inserted in the shaft insertion hole 56. A fitting hole 57 having a circular shape coaxial with the rotating shaft 11a is formed in an end surface of the rotating shaft 11a on the output side. A female spline is formed on an inner circumference of the fitting hole 57.

Whereas the input shaft 30 on the speed reducer 12 side has an end portion on the first end side protruding outward from the end surface of the first carrier block 14A on the first end side. This protruding portion is the second connecting portion 60 that is connected with the rotating shaft 11A of the motor 11. A male spline is formed on the outer peripheral surface of the second connecting portion 60. The second connecting portion 60 is inserted through the shaft insertion hole 56 of the motor case 50 and fitted into the fitting hole 57 of the rotating shaft 11a. The input shaft 30 and the rotating shaft 11a of the motor 11 are made relatively non-rotatable by the spline fitting of the second connecting portion 60 in the mating hole 57.

The motor 11 is arranged such that the end surface of the motor case 50 on the output side is brought close to the end surface of the first carrier block 14A on the first end side, and the second connecting portion 60 of the input shaft 30 is inserted into the shaft insertion hole 56 in the end surface of the motor case 50. At this time, by pressing the motor case 50 against the end surface of the first carrier block 14A, the rotating shaft 11a of the motor 11 is spline-fitted to the input shaft 30 disposed on the speed reducer 12 side. Next, in this state, the motor case 50 is secured to the end surface of the first carrier block 14A on the first end side by the plurality of bolts 54.

The drive unit 10 includes the motor 11 and the speed reducer 12 to which the motor 11 is attached in the above described manner. The casing 13 of the speed reducer 12 is fixed to the base member 2 by fastening the bolts 27. The proximal end of the rotating arm 3 is fastened with the bolts 36 and fixed to the speed reducer 12 that has been fixed to the base member 2. The proximal end of the rotating arm 3 is fastened to the end surface of the second carrier block 14B on the second end side.

### < Operation of Industrial Robot >

To operate to rotate the rotating arm 3, the motor 11 is driven to rotate the input shaft 30 of the speed reducer 12 in a predetermined direction. The rotation of the input shaft 30 is transmitted to the crankshafts 15 via the spur gears 26. As each crankshaft 15 rotates, the first and second oscillating gears 16A and 16B follow the rotation of the eccentric regions 15a and 15b of the crankshaft 15 to spin and rotate while engaging the internal tooth pins 22 on the casing 13. At this time, the rotation component of the first and second oscillating gears 16A and 16B is outputted to the rotating arm 3 via the second carrier block 14B. As a result, the output of the motor 11 is reduced at a predetermined reduction ratio by the reduction gear 12, and the reduced output is transmitted to the rotating arm 3. Since the motor case 50 of the motor 11 is fixed to the end surface of the first carrier block 14A of the reducer 12, the motor case 50 rotates together with the first carrier block 14A when the motor 11 is driven.

### < Disassembly and Maintenance of Industrial Robot >

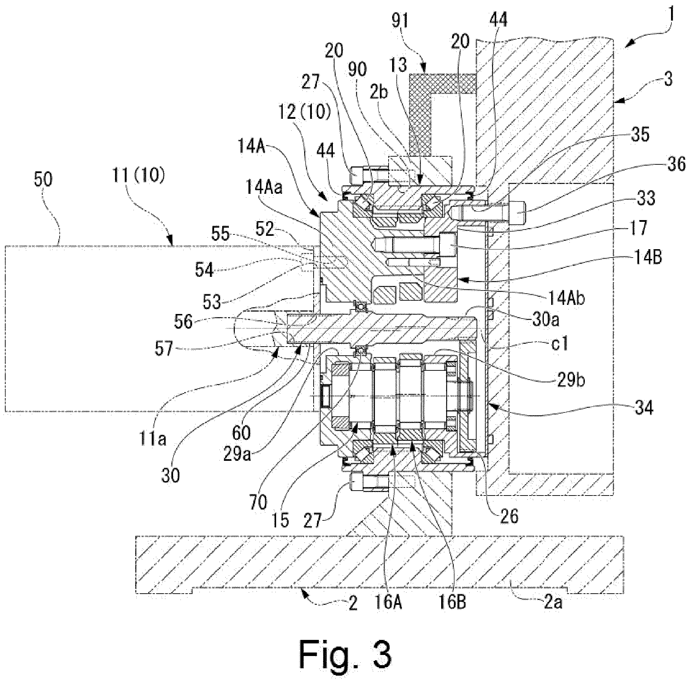

Figs. 3 to 5 show a longitudinal sectional view of the industrial robot 1 at the time of its disassembly and maintenance process. The disassembly and maintenance method (disassembly method for maintenance) of the industrial robot 1 will now be described. The disassembly and maintenance method has the following (1) to (4) steps.

### (1) Temporary securing step (see Fig. 3)

Attach a fixing jig 91 to the base member 2 and the rotating arm 3 to securing the rotating arm 3 to the base member 2 by the fixing jig 91. This restricts the movement (e.g., collapse) of the rotating arm 3.

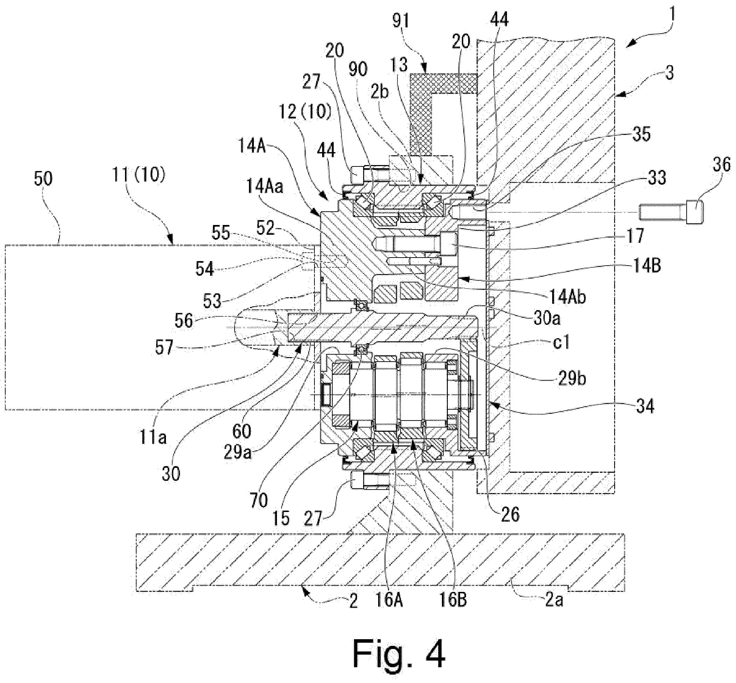

### (2) First unfastening step (see Fig. 4)

After the temporary securing step, remove the bolts 36 from the second carrier block 14B and the rotating arm 3.

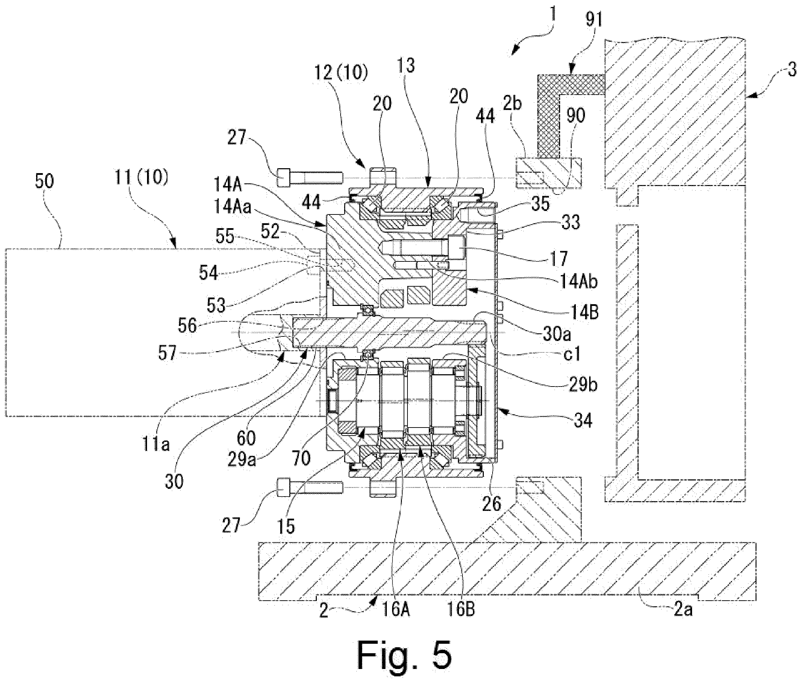

### (3) Second unfastening process (see Fig. 5)

After the temporary securing step, remove the bolts 27 that connect the casing 13 and the base member 2.

### (4) Drive unit separating step (see Fig. 5)

The speed reducer 12 together with the motor 11 is separated from the base member 2.

When the speed reducer 12 and the motor 11 are separated from the base member 2 according to the disassembly and maintenance method, the speed reducer 12 and the motor 11 can be easily removed without disconnecting the heavy and long rotating arm 3 (driven member) from the base member 2.

### <Advantageous Effects of the Embodiment>

As described above, the speed reducer 12 of the embodiment can be sealed inside the single unit of the speed reducer 12 by the bearing 70 with sealing function (shaft seal portion), the casing seal member 44 (casing seal portion), and the end cover 34. Thus, the motor 11 can be connected to the speed reducer 12 without the use of an adapter that also serves as a lubricant filled portion. Therefore, when the speed reducer 12 of the embodiment is employed, the overall length of the drive unit with the motor 11 connected can be further reduced while maintaining easiness of maintenance work.

The speed reducer 12 is also the power transmission device that transmits the rotation of the motor 11 to the driven member (rotating arm 3). The reduction mechanism housed in the casing 13 of the speed reducer 12 can be replaced with a power transmission mechanism that does not perform speed reduction. In this case, the same effect as described above can be achieved by sealing the interior of the power transmission device itself by means of the bearing 70 with sealing function (shaft seal portion), the casing seal member 44 (casing seal portion), and the end cover 34.

The speed reducer 12 of the embodiment has the recess 33 in the second carrier block 14B (carrier) on the end surface situated on the second end side. The spur gears 26 are provided in the recess 33, and the recess 33 communicates with the shaft hole 29b. The recess 33 is sealed by the end cover 34. Thus, the recess 33 and the end of the shaft hole 29b are covered by the end cover 34 from the second end side. Therefore, when this configuration is adopted, the second end side of the second carrier block 14B can be sealed by the end cover 34, which has a simple shape that does not occupy much space in the axial direction, thereby reducing the shaft length of the speed reducer 12, resulting in ease of fabrication.

In the reduction speed reducer12 of the embodiment, the end of the first carrier block 14A on the first end side serves as the motor fixing portion where the motor case 50 of the motor 11 is fixed. Therefore, when the motor 11 is driven with the motor case 50 fixed to the end of the first carrier block 14A, the motor case 50 rotates integrally with the first carrier block 14A while the reduced rotation is transmitted from the second carrier block 14B to the rotating arm 3. When this configuration is adopted, the motor case 50 is directly fixed to the end of the first carrier block 14A on the first end side, and thus the shaft length of the entire device with the motor 11 connected to the speed reducer 12 can be further shortened.

Furthermore, the speed reducer 12 of the embodiment has the second connecting portion 60 at the end of the input shaft 30. The second connecting portion 60 protrudes from the end surface of the first carrier block 14A toward the first end side and is connected relatively unrotatable to the rotating shaft 11a of the motor 11 in the motor case 50. Therefore, compared to the case where the rotating shaft 11a protruding from the motor case 50 is connected to the input shaft 30 in the shaft hole 29a of the first carrier block 14A, the bearing 70 with sealing function (shaft sealing member) that seals the space between the shaft hole 29a and the input shaft 30 can be disposed closer to the motor 11. With this configuration, the shaft length of the first carrier block 14A can be further shortened.

In the speed reducer 12 of the embodiment, the second connecting portion 60 of the input shaft 30 is spline fitted to the rotating shaft 11a of the motor 11. Therefore, when fixing the motor case 50 to the end of the first carrier block 14A (motor fixing portion), the second connecting portion 60 of the input shaft 30 can be easily connected to the rotating shaft 11a of the motor 11 by inserting the end of the input shaft 30 into the shaft insertion hole 56 of the motor case 50. In this way, assembly of the motor 11 to the speed reducer 12 becomes easy with this configuration.

In the speed reducer 12, the carrier includes the first carrier block 14A with the column portions14Ab protruding from the end surface of a base plate portion 14Aa and the second carrier block 14B against which the column portions 14Ab are butted. Furthermore, the second carrier block 14B and the column portions 14Ab are securely connected by fastening the bolts 17 (fastening members) from the second end side of the second carrier block 14B. And the motor fixing portion where the motor 11 is fixed is disposed on the base plate portion 14Aa of the first carrier block 14A, where the bolts 17 are not provided. Thus, the bolts 54 (fixing member) for fixing the motor case 50 to the carrier does not interfere with the bolts 17 (fastening member) for connecting the column portions 14Ab and the second carrier block 14B. With this configuration, it is no longer necessary to extend the shaft length of the carrier (first carrier block 14A and second carrier block 14B) to avoid interference between the bolts 54 and bolts 17. Since the shaft length does not need to be extended, the overall shaft length of the reducer 12 can be further reduced.

Furthermore, the disassembly and maintenance method of the industrial robot 1 (industrial machine) described above includes: temporary securing the rotating arm 3 and the base member 2 by the fixing jig 91; a first unfastening step for separating the rotating arm 3 from the second carrier block 14B after the temporary securing step; a second unfastening step for separating the casing 13 of the speed reducer 12 from the base member 2 after the temporary securing step; and separating the speed reducer 12 together with the motor 11 from the base member 2. When disassembling the industrial robot 1 for maintenance, the speed reducer 12 can be removed from the base member 2 together with the motor 11 while the rotating arm 3 remains fixed to the base member 2 by the fixing jig 91. At this time, the rotating arm 3 does not need to be separated from the base member 2. Therefore, even when the rotating arm 3 is a long and heavy, the speed reducer 12 can be easily separated for maintenance work. Furthermore, the speed reducer 12 itself has a sealed internal structure. Therefore, when separating the speed reducer 12 from the base member, there is no need to drain from the speed reducer 12 the lubricating liquid that lubricating the mechanical parts. This also contributes greatly to facilitating the disassembly work for maintenance.

The present invention is not limited to the foregoing embodiments. Various modifications can be made within the scope of the present invention. For example, the above embodiment employs the speed reducer 12 of the embodiment in the arm driving part of the industrial robot. However, the application of the speed reducer 12 is not limited to industrial robots. The speed reducer 12 can be applied to industrial machines other than robots, such as turntables and rotating jigs, for example. In these cases, a plate or block-shaped rotating body can be used as the driven member connected to the output rotating body (carrier) instead of the rotating arm 3.

In the embodiments disclosed herein, multiple components may be integrated into a single component, or conversely, a single component may be divided into multiple components. Irrespective of whether or not the components are integrated, they are acceptable as long as they are configured to attain the object of the invention.

### LIST OF REFERENCE NUMBERS

1...industrial robot (industrial machine), 2...base member, 3...rotating arm (connected member), 11...motor, 11a...rotating shaft, 12... speed reducer, 13...casing, 14A...first carrier block (carrier, output rotating body), 14Aa...base plate portion, 14Aap...outer peripheral surface (first outer peripheral surface), 14Ab... column portions, 14B...second carrier block (carrier, output rotating body), 14Bp ... outer peripheral surface (second outer peripheral surface), 14N...outer peripheral edge portion (first connecting portion), 15...crankshafts (power transmission mechanism), 15A, 15B...eccentric region, 16A...first oscillating gear (power transmission mechanism), 16B...second oscillating gear (power transmission mechanism), 17...bolts (fastening member), 26... spur gear (power transmission mechanism), 29A, 29B...shaft hole, 30...input shaft, 34...end cover, 44...casing seal member (casing seal portion), 60...second connecting portion, 70...bearing with seal function (shaft seal portion), 91 ...fixing jig

## Claims

1. A power transmission device, comprising:
a casing (13) fixed to a base member (2);
an output rotating body (14A, 14B) having a through hole and an axial end in an axial direction, the through hole penetrating the output rotating body in the axial direction, the output rotating body (14A, 14B) being rotatably housed in the casing (13) and having a first connecting portion (14N) that is disposed at the axial end and to be connected to a connected member (3);
an input shaft (30) inserted in the through hole and connected to a rotating shaft (11a) of a motor (11);
a power transmission mechanism (15, 16A, 16B, 26) transmitting rotation of the input shaft (30) to the output rotating body (14A, 14B), the power transmission mechanism (15, 16A, 16B, 26) being disposed in the casing (13) while surrounded by the output rotating body (14A, 14B);
a shaft seal portion (70) sealing a space between the through hole and the input shaft (30);
a casing seal portion (44) sealing a space between the casing (13) and an outer peripheral surface of the output rotating body (14A, 14B); and
an end cover (34) attached to the first connecting portion (14N) of the output rotating body (14A, 14B).

2. A speed reducer (12), comprising:
a casing (13) fixed to a base member (2) and having internal tooth on its inner peripheral surface;
a carrier (14A, 14B) having a through hole and an axial end in an axial direction, the through hole penetrating the carrier (14A, 14B) in the axial direction, the carrier (14A, 14B) further having a first outer peripheral surface (14Aap) and a second outer peripheral surface (148p) that are spaced apart from each other in the axial direction, the carrier (14A, 14B) being rotatably housed in the casing (13) and having a first connecting portion (14N) that is disposed at the axial end and to be connected to a connected member (3);
an input shaft (30) rotatably inserted in the through hole and connected to a rotating shaft (11a) of a motor (11);
a crankshaft (15) rotatably supported inside the carrier (14A, 14B) and having an eccentric region (15a, 15b), the eccentric region (15a, 15b) spinning and rotating in conjunction with the rotation of the input shaft (30);
an oscillating gear (16A, 16B) disposed between the first outer peripheral surface (14Aap) and the second outer peripheral surface (148p), the oscillating gear (16A, 16B) oscillatorily rotates with the eccentric region (15a, 15b) of the crankshaft (15) and outputting a reduced rotation to the carrier (14A, 14B) while meshing with the internal teeth;
a shaft seal portion (70) sealing a space between the through hole and the input shaft (30);
a casing seal portion (44) sealing a space between the casing (13) and the first outer peripheral surface (14Aap) and a space between the casing (13) and the second outer peripheral surface (14Bp); and
an end cover (34) attached to the first connecting portion (14N) of the carrier (14A, 14B).

3. The speed reducer (12) of claim 2, wherein the first connecting portion (14N) of the carrier (14A, 14B) has an outer peripheral edge portion (14N) situated at the axial end of the carrier (14A, 14B),
wherein a recess is formed in the outer peripheral edge portion (14N) on its inner side,
wherein a transmission rotating body that transmits rotation of the input shaft (30) to the crankshaft (15) is disposed in the recess, and
wherein the end cover (34) is attached to the outer peripheral edge portion (14N) so that it covers the recess.

4. The speed reducer (12) of claim 2, further comprising a motor fixing portion disposed at an end of the carrier (14A, 14B) opposite to the first connecting portion (14N) in the axial direction,
wherein the motor (11) is fixed to the motor fixing portion.

5. The speed reducer (12) of claim 4, wherein the input shaft (30) has a second connecting portion (60) protruding from the motor fixing portion, the second connecting portion (60) being connected to the rotating shaft (11a) in a relatively non-rotatable manner inside the motor (11).

6. The speed reducer (12) of claim 5, wherein the second connecting portion (60) and the rotating shaft (11a) are connectible by spline fitting.

7. The speed reducer (12) of claim 4, wherein the carrier (14A, 14B) includes:
a first carrier block (14A) having a base plate portion (14Aap) and a plurality of column portions (14Ab), the base plate portion (14Aap) having an annular plate shape with an end surface in the axial direction, the plurality of column portions (14Ab) extending substantially along the axial direction from the end surface of the base plate portion (14Aap);
a second carrier block (14B) having a first end surface against which the plurality of column portions (14Ab) are butted in the axial direction and a second end surface opposite to the first end surface in the axial direction, the second carrier block (14B) having an annular plate shape; and
a fastening member (17) securing the second carrier block (14B) to a corresponding one of the column portions (14Ab) from the second end surface of the second carrier block (14B),
wherein the motor fixing portion is disposed at an end of the base plate portion (14Aap) opposite to the plurality of column portions (14Ab) in the axial direction.

8. An industrial machine comprising:
a motor (11);
a speed reducer (12) for decelerating rotation of the motor (11);
a base member (2) to which the speed reducer (12) is fixed; and
a driven member (3) being rotated by output of the speed reducer (12),
wherein the speed reducer (12) includes:
a casing (13) fixed to a base member (2) and having internal tooth on its inner peripheral surface;
a carrier (14A, 14B) having a through hole and an axial end in an axial direction, the through hole penetrating the carrier (14A, 14B) in the axial direction, the carrier (14A, 14B) further having a first outer peripheral surface (14Aap) and second outer peripheral surface (148p) that are spaced apart from each other in the axial direction, the carrier (14A, 14B) being rotatably housed in the casing (13) and having a first connecting portion (14N) that is disposed at the axial end and to be connected to the driven member (3);
an input shaft (30) rotatably inserted in the through hole and connected to a rotating shaft (11a) of the motor (11);
a crankshaft (15) rotatably supported inside the carrier (14A, 14B) and having an eccentric region (15a, 15b), the eccentric region (15a, 15b) spinning and rotating in conjunction with the rotation of the input shaft (30);
an oscillating gear (16A, 16B) disposed between the first outer peripheral surface (14Aap) and the second outer peripheral surface (148p), the oscillating gear (16A, 16B) oscillatorily rotates with the eccentric region (15a, 15b) of the crankshaft (15) and outputting a reduced rotation to the carrier while meshing with the internal teeth;
a shaft seal portion (70) sealing a space between the through hole and the input shaft (30);
a casing seal portion (44) sealing a space between the casing (13) and the first outer peripheral surface (14Aap) and a space between the casing (13) and the second outer peripheral surface (14Bp);
an end cover (34) attached to the first connecting portion (14N) of the carrier (14A, 14B); and
a motor fixing portion disposed at an end of the carrier (14A, 14B) opposite to the first connecting portion (14N) in the axial direction,
wherein the motor (11) is fixed to the motor fixing portion, and
wherein the input shaft (30) has a second connecting portion (60) protruding from the motor fixing portion, and the second connecting portion (60) is connected to the rotating shaft (11a) in a relatively non-rotatable manner inside the motor (11).

9. A method of disassembling an industrial machine for maintenance, wherein the industrial machine includes:
a motor (11);
a speed reducer (12) for decelerating rotation of the motor (11);
a base member (2) to which the speed reducer (12) is fixed; and
a driven member (3) being rotated by output of the speed reducer (12),
wherein the speed reducer (12) includes:
a casing (13) fixed to a base member (2) and having internal tooth on its inner peripheral surface;
a carrier (14A, 14B) having a through hole and an axial end in an axial direction, the through hole penetrating the carrier (14A, 14B) in the axial direction, and a first outer peripheral surface (14Aap) and second outer peripheral surface (14Bp) that are spaced apart from each other in the axial direction, the carrier (14A, 14B) being rotatably housed in the casing (13) and having a first connecting portion (14N) that is disposed at the axial end and to be connected to the driven member (3);
an input shaft (30) rotatably inserted in the through hole and connected to a rotating shaft (11a) of the motor (11);
a crankshaft (15) rotatably supported inside the carrier and having an eccentric region (15a, 15b), the eccentric region (15a, 15b) spinning and rotating in conjunction with the rotation of the input shaft (30);
an oscillating gear (16A, 16B) disposed between the first outer peripheral surface (14Aap) and the second outer peripheral surface (14Bp), the oscillating gear (16A, 16B) oscillatorily rotates with the eccentric region (15a, 15b) of the crankshaft (15) and outputting a reduced rotation to the carrier (14A, 14B) while meshing with the internal teeth;
a shaft seal portion (70) sealing a space between the through hole and the input shaft (30);
a casing seal portion (44) sealing a space between the casing (13) and the first outer peripheral surface (14Aap) and a space between the casing (13) and the second outer peripheral surface (14Bp);
an end cover (34) attached to the first connecting portion (14N) of the carrier; and
a motor fixing portion disposed at an end of the carrier (14A, 14B) opposite to the first connecting portion (14N) in the axial direction,
wherein the motor (11) is fixed to the motor fixing portion,
wherein the input shaft (30) has a second connecting portion (60) protruding from the motor fixing portion, the second connecting portion (60) being connected to the rotating shaft (11a) in a relatively non-rotatable manner inside the motor (11),
the method comprising:
temporary securing the driven member (3) to the base member (2) by attaching a fixing jig to the base member (2) and the driven member (3);
a first unfastening step for separating the driven member (3) from the carrier (14A, 14B) after the temporary securing;
a second unfastening step for separating the casing (13) from the base member (2) after the temporary securing; and
separating the speed reducer (12) together with the motor (11) from the base member (2) after the first and second unfastening steps.
